Europäisches Patentamt

European Patent Office

Office européen des brevets

(19)

(11) **EP 1 073 213 A1**

(12) **EUROPEAN PATENT APPLICATION**

(43) Date of publication:
**31.01.2001 Bulletin 2001/05**

(51) Int Cl.$^7$: **H04B 7/005**

(21) Application number: **99305918.7**

(22) Date of filing: **26.07.1999**

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI**<br><br>(71) Applicant: **LUCENT TECHNOLOGIES INC.**<br>**Murray Hill, New Jersey 07974-0636 (US)** | (72) Inventor: **Al-Housami, Housam Maher**<br>**Swindon, Wiltshire SN1 2PL (GB)**<br><br>(74) Representative: **Williams, David John et al**<br>**Lucent Technologies UK Limited,**<br>**5 Mornington Road**<br>**Woodford Green, Essex IG8 0TU (GB)** |

(54) **Transmitter power control for mobile equipment using variable step size**

(57)     There is described a method of controlling the transmitter power in a mobile comprising the steps of: receiving from the base station a command indicative of whether the transmitter power should be increased or decreased, wherein responsive to the command the transmitter power is adjusted in the appropriate direction, the amount by which the transmitter power is adjusted being variable. If the k+1th power command signal has a state corresponding to the kth power command signal, the transmitter power may be increased or decreased in the same direction by a multiple of the kth step size; and if the k+1th power command signal has a state differing from the kth power command signal, the transmitter power may be increased or decreased in the opposite direction by a default step size.

## FIG. 1

**Description**

**Field of the Invention**

The present invention relates to the control of a transmitters output power, and particularly but not exclusively to the control of the transmitter power in mobile equipment based on a control signal received from a control point such as a base station.

**Background to the Invention**

In conventional mobile environments, base station acts as a central point for a multitude of mobile equipment users in a cell supported by the base station to communicate with a communications infrastructure..

If all mobiles in a cell transmit at the same power, their signals will arrive at the base station with vastly different power levels due to path losses caused by differing distances between each user and the base station, and variations in the radio propagation path. If a particular signal received at a base station is too weak, it will be masked by other stronger signals. If, on the other hand, it is strong, its performance will be satisfactory but it will introduce interference to other user's signals in the same cell and degrade their performance.

For example, the capacity of a conventional CDMA system is maximised if the transmit power of each mobile is controlled so that at the base station the same power level is received from each mobile, regardless of its distance from the base station or its propagation path.

Power control is used on the reverse link (i.e. the link form the mobile to the base station) to combat the well-known near-far problem and thus minimise the effect of interference on system capacity. The more error there is in controlling the power of the mobile signals on the reverse link in a cell, the lower the capacity of that cell. Ideal power control will optimise the capacity of the cell. Power control is thus a vital issue from a capacity point of view.

Effective average or long-term power control is known to be achieved by closed inner-loop power control. The aim of closed inner-loop power control is to combat the effect of fast fading on the channel from the mobile to the base station and to make all the received signals from all mobiles equal at the base station, so as to resist the near-far effect. This requires that a base station provides continuous feedback to each mobile so that the mobile varies its power accordingly. The base station estimates the user signal power on the reverse link and compares it with a desired nominal threshold. The base station then transmits a one-bit command to the mobile to lower or raise its transmitter power by a fixed step based on whether the measured received power is higher or lower than a desired nominal threshold level.

This loop introduces a delay which is the sum of the transmission time and the time needed to execute the command in the transmitter of the mobile.

In addition, the faster the terminal the more Doppler shift there is in the signals transmitted by the mobiles, and the closer are the fades. The delays that the power control commands suffer from makes the received power have a wider distribution. The fade times are relatively short, and the fixed;top power control is not fast enough to track these fades.

It is therefore an object of the invention to provide an improved inner-loop power control technique, which minimises the above stated disadvantages.

**Summary of the Invention**

According to the present invention there is provided a method of controlling the transmitter power in a mobile comprising the steps of: receiving from the base station a command indicative of whether the transmitter power should be increased or decreased, wherein responsive to the command the transmitter power is adjusted in the appropriate direction, the amount by which the transmitter power is adjusted being variable.

The amount by which the transmitter power is adjusted may be variable in dependence on the number of successive commands received having the same state. If two successive commands have the same state, the amount by which the power is adjusted for the second command may be a multiple of the amount by which the power is adjusted for the first command.

The multiple may be variable. The multiple may be variable in dependence on the speed of the mobile.

The multiple may be fixed.

Responsive to a first command the transmitter power may be adjusted by a fixed amount in the appropriate direction. The transmitter power may be adjusted by a multiple of the fixed amount.

In dependence on two successive commands having different states, the amount by which the transmitter power is adjusted may be a fixed amount in a direction determined by the second of the successive commands. The transmitter power may be adjusted by a multiple of the fixed amount.

The command may comprise a signal having a first state indicating that the power should be increased and a second state indicating that the power should be decreased.

If the k+1th power command signal has a state corresponding to the kth power command signal, the transmitter power may be increased or decreased in the same direction by a multiple of the kth step size; and if the k+1th power command signal has a state differing from the kth power command signal, the transmitter power may be increased or decreased in the opposite direction by a default step size. The multiple may be $\alpha$ and the default step size may be $\Delta$.

The invention further provides, in a mobile circuitry for controlling the transmitter power of the mobile, comprising: input circuitry for receiving a command indicative of whether the transmitter power should be increased or decreased; and control circuitry, responsive to the command, for varying the transmitter power, wherein the amount by which the transmitter power is adjusted is variable.

The circuitry may further include storage circuitry connected to the input circuitry and for storing at least one received command,; and comparator circuitry connected to the storage circuitry and the control circuitry, wherein the amount by which the transmitter power is adjusted is variable in dependence on the number of successive commands received having the same state.

The storage circuitry may store one received command, the transmitter power being variable in dependence on two successive commands.

## Brief Description of the Drawings

Figure 1 is a block schematic of elements of a mobile equipment for implementing the present invention;

Figure 2 is a plot of performance parameters used in an embodiment of the present invention; and

Figure 3 is a plot illustrating the improved performance of an embodiment of the present invention over an existing technique.

## Description of Preferred Embodiment

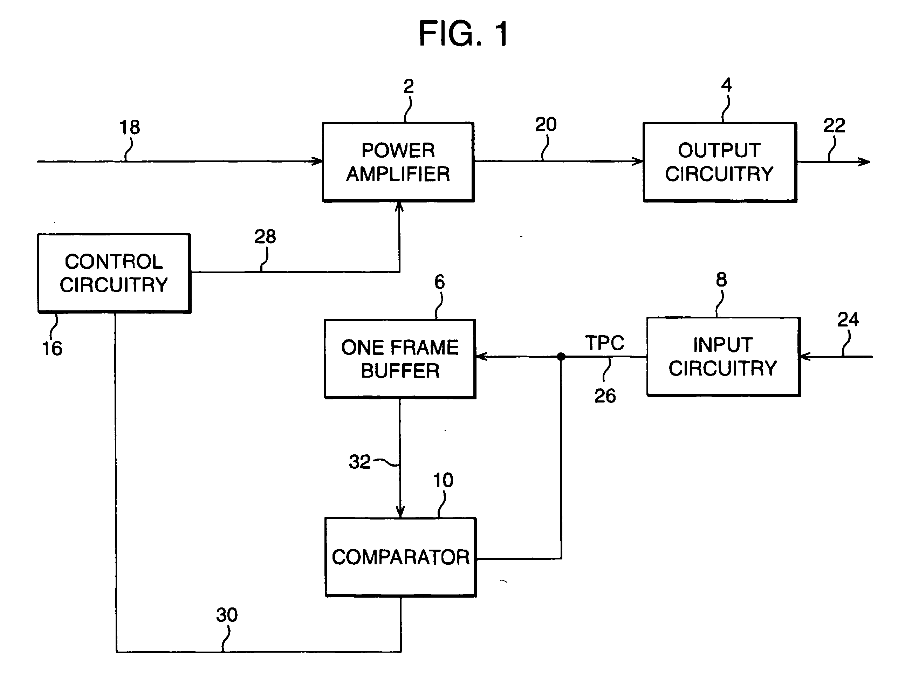

Referring to Figure 1, there is illustrated a block diagram of the main functional blocks provided in a mobile equipment for implementing the present invention. It will be understood that Figure 1 does not show all the functional elements necessary for the operation of the mobile equipment, but only those elements necessary for an understanding of the present invention.

The mobile equipment comprises a power amplifier 2, output circuitry 4, input circuitry 8, a one frame buffer 6, a comparator 10, and a control circuit 16. The power amplifier receives on line 18 a signal to be transmitted to a base station, and outputs on line 20 to the output circuitry 4 an amplified version of that signal. The output circuitry 4 will receive additional signals, and outputs on line 22 radio signals to the base station at a power level determined by the power amplifier 2. The input circuitry receives on line 24 radio signals form the base station. On line 26 the input circuitry provides a power control signal, provided in the signals from the base station on line 24, to the one frame buffer 6 and the comparator 10. In the preferred example the power control signal is a single bit, termed a transmitter power control TPC bit. The comparator 10 additionally receives on a line 32 a signal output from the one frame buffer 6. The output of the comparator on line 30 forms an input to the control circuitry 16, which in turn provides a control signal on line 28 to the power amplifier 2. The operation of the functional blocks shown in Figure 1 to implement the present invention will now be described.

The one frame buffer 6 only stores, in the preferable embodiment, one bit, as will be discussed further hereinbelow. However, it is called a one frame buffer herein because the stored bit is updated once every frmae, and hence its value remains unchanged for one frame length. As will also be discussed hereinbelow, the purpose of storing the bit for one frame so that the bit value of successive frames can be compared.

The transmitter power control signal TPC is preferably one bit transmitted in every frame by the base station. In a first state the bit indicates that the power of the mobile transmitter should be increased, and in a second state the bit indicates that the power of the mobile transmitter should be decreased. The one frame buffer 6, the comparator 10, and the control circuit 16 operate in dependence on the value of the transmitter power control signal to control the amplification factor of the power amplifier 2, in accordance with the invention, and thereby control the power of the mobile equipment transmitter.

The transmitter power control signal is recovered from the radio signal received on line 24 by the input circuitry 8 and output on line 26 in a manner which is outside the scope of the present invention. One skilled in the art will be familiar with the implementation of circuitry for doing this.

The one frame buffer stores the received transmitter power control signal on line 26 for one frame, such that the comparator can compare the current power control signal on line 26 received in the current frame with the power control signal received in the previous frame and presented at the output of the one frame buffer on line 32. In this way the comparator generates an output on line 30 which has two states.

In a first state the output of the comparator on line 30 indicates that the power control signal has changed state in this frame compared to the previous frame, and in a second state the output of the comparator indicates that the power control signal remains in the same state in this frame compared to the previous frame.

If the power control signal remains in the same state in successive frames, then the amplification of the power amplifier is increased or decreased in the same direction. That is if the amplification was previously increased, it is increased further, and if the amplification was previously decreased, it is decreased further. If the power control signal changes to a different state in successive frames, then the amplification of the power amplifier is increased or decreased in the opposite direction. That is if the amplification was previously increased, it is now decreased, and if the amplification was previously decreased, it is now increased.

In accordance with the present invention, the control circuit 16 operates such that the amount by which the amplification is increased or decreased is variable. More specifically, the amount by which the amplification factor changes in any direction (increased or decreased) is preferably determined directly by the number of successive transmitter power control signals indicating that the power of the transmitter should be adjusted in the same direction. That is, the number of successive transmitter power control signals having the same state.

Thus if for successive received frames the output of the comparator 30 does not change, then the amplification factor of the power amplifier is controlled by the control circuit 16 to change the amplification factor successively by larger amounts.

The control circuitry 16 generates the signal on line 28 to the power amplifier which is indicative of the amplification factor to be applied in the power amplifier to amplify the signal on line 18 for transmission by the mobile equipment.

The signal on line 28 generates an amplification factor, to be applied in the power amplifier 2, in accordance with the following algorithm:

$$\text{Amplification Factor} = \begin{cases} \alpha.\Delta_{(k+1)} \text{ if } \text{TPC}_{(k+1)} = \text{TPC}_{(k)} \\ \alpha.\Delta_{default} \text{ if } \text{TPC}_{(k+1)} \neq \text{TPC}_{(k)} \end{cases}$$

Where:

$\Delta_{default}$ = default step size

$\text{TPC}_{(k+1)}$ = state of the $(k+1)^{th}$ transmitter power control command

$\alpha$ = adjustment coefficient

The sign of the step size depends on the sign of the previous TPC. The sign remains the same if TPC(k+1) = TPC(k), and changes if TPC(k+1) ≠ TPC(k).

Thus the power control step size is made variable. Each step size is, in the preferable implementation presented herein made to be related to the preceding step size by a certain coefficient, provided both are in the same direction (increase or decrease). Thus, for example, if the first (default) step size is 1 dB, the next step size will be ($\alpha$. 1) dB, provided the successive steps require a change in the same direction. For a further successive transmitter power control signal having the same state, the next step size will be ($\alpha$ ($\alpha$. 1)) dB. If the next transmitter power control signal has a different state, the next step size will be ($\alpha$. $\Delta_{default}$) in the opposite direction.

The invention can be readily implemented within a standard mobile environment because the same power control symbol is used and there is no requirement to modify the power control information transmitted across the air interface.

In different embodiments the adjustment coefficient, $\alpha$, may be variable or constant.

In one particular embodiment the adjustment coefficient is variable in dependence upon the Doppler shift of the signals transmitted by the mobile. The mobile or the base station may be equipped with the means for determining the speed of the mobile and estimating the Doppler shift of the mobile. The Doppler shift is then presented as an additional input to the control circuit 16, which varies the adjustment coefficient in dependence on variations in the Doppler shift. The calculation of the Doppler shift based upon the speed of the mobile is outside the scope of the present invention, and is within the skills of one familiar with the art.

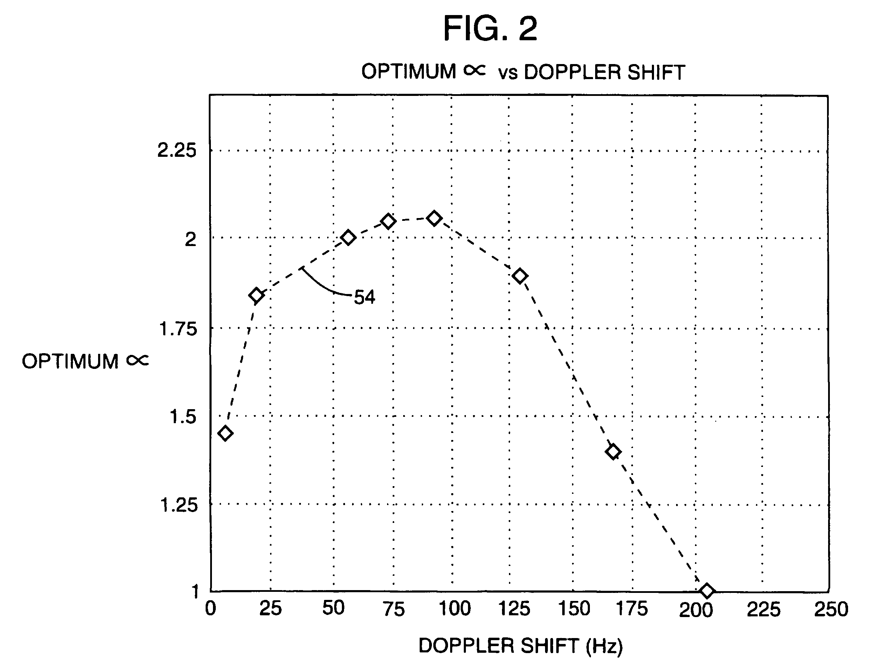

For every speed there is an optimum adjustment coefficient that minimises the received power variations. The control circuit may be provided with a mapping table, which maps given Doppler shifts to given adjustment coefficients. Referring to Figure 2 there is shown a curve 54 plotting the optimum adjustment coefficients that suit particular Doppler shifts. The mapping in the control circuit 16 may be based on such a curve. The adjustment coefficient is then chosen for a particular speed of the mobile.

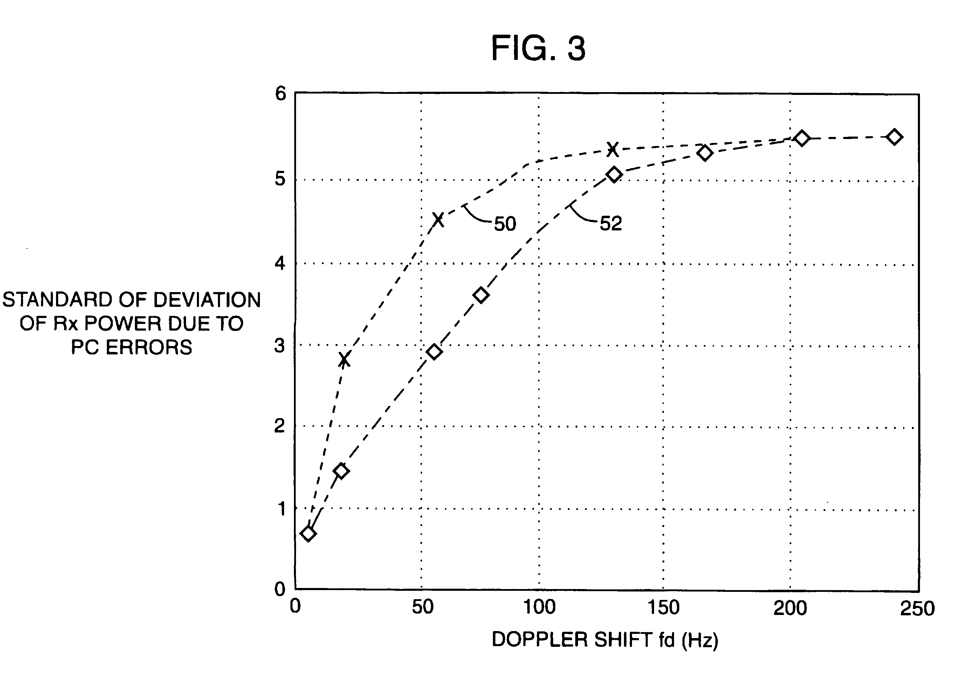

Referring to Figure 3 there is shown a simulation assuming a worst-case one-path Rayleigh channel to determine the best coefficient values that minimise the standard of deviation of the received power. Figure 3 shows the gain in performance achieved using the technique of the present invention. as represented by curve 50, compared to the conventional fixed step technique, as represented by curve 52. The algorithm of the particular example described herein works very well for Doppler shift of around 130 Hz for the UNITS frequency (around 2000GHz). This corresponds to a maximum mobile speed of 70 km/h.

In a further, simplified embodiment, a fixed adjusting coefficient is used for all cases of Doppler shift. Such an arrangement still gives an enhanced performance over the conventional fixed step technique. An optimum adjusting coefficient for all Doppler frequencies can be easily extracted for the simulation results of Figure 2. The optimum fixed adjusting coefficient that gives an avergae improvement in performance has been found to be 1.8.

In another embodiment a different adjusting coefficient may be used for different cell types. The optimum adjusting coefficient approaches unity as the Doppler shift increases. In cells that cover areas with high speed mobiles, such as motorways/highways, the new algorithm may be switched off, and conventional techniques applied. Thus, a cell where most of the users are expected to be pedestrians, which is typically a small cell, can use the enhanced algorithm of the present invention, and cells where vehicular users can be expected, and which is typically a large cell, may use the conventional fixed step method.

**Claims**

1. A method of controlling the transmitter power in a mobile comprising the steps of: receiving from the base station a command indicative of whether the transmitter power should be increased or decreased, wherein responsive to the command the transmitter power is adjusted in the appropriate direction, the amount by which the transmitter power is adjusted being variable.

2. The method of claim 1 wherein the amount by which the transmitter power is adjusted is variable in dependence on the number of successive commands received having the same state.

3. The method of claim 2 wherein if two successive commands have the same state, the amount by which the power is adjusted for the second command is a multiple of the amount by which the power is adjusted for the first command.

4. The method of claim 3 wherein the multiple is variable.

5. The method of claim 4 wherein the multiple is variable in dependence on the speed of the mobile.

6. The method of claim 3 wherein the multiple is fixed.

7. The method of any one of claims 1 to 6 wherein responsive to a first command the transmitter power is adjusted by a fixed amount in the appropriate direction.

8. The method of claim 7 when dependent upon any one of claims 3 to 7 wherein the transmitter power is adjusted by a multiple of the fixed amount.

9. The method of any one of claims 1 to 8 wherein in dependence on two successive commands having different states, the amount by which the transmitter power is adjusted is a fixed amount in a direction determined by the second of the successive commands.

10. The method of claim 10 when dependent on any one of claims 3 to 9, wherein the transmitter power is adjusted by a multiple of the fixed amount.

11. The method of any one of claims 1 to 10 wherein the command comprises a signal having a first state indicating that the power should be increased and a second state indicating that the power should be decreased.

**12.** The method of any preceding claim wherein if the k+1th power command signal has a state corresponding to the kth power command signal, the transmitter power is increased or decreased in the same direction by a multiple of the kth step size; and if the k+1th power command signal has a state differing from the kth power command signal, the transmitter power is increased or decreased in the opposite direction by a default step size.

**13.** The method of claim 12 wherein the multiple is $\alpha$ and the default step size is $\Delta$.

**14.** In a mobile, circuitry for controlling the transmitter power of the mobile, comprising: input circuitry for receiving a command indicative of whether the transmitter power should be increased or decreased; and control circuitry, responsive to the command, for varying the transmitter power, wherein the amount by which the transmitter power is adjusted is variable.

**15.** The circuitry of claim 14 further including storage circuitry connected to the input circuitry and for storing at least one received command,; and comparator circuitry connected to the storage circuitry and the control circuitry, wherein the amount by which the transmitter power is adjusted is variable in dependence on the number of successive commands received having the same state.

**16.** The circuitry of claim 15 wherein the storage circuitry stores one received command, the transmitter power being variable in dependence on two successive commands.

# FIG. 1

EP 1 073 213 A1

# FIG. 2

## OPTIMUM ∝ vs DOPPLER SHIFT

EP 1 073 213 A1

# FIG. 3

STANDARD OF DEVIATION OF Rx POWER DUE TO PC ERRORS

DOPPLER SHIFT fd (Hz)

EP 1 073 213 A1

**European Patent Office**

## EUROPEAN SEARCH REPORT

Application Number

EP 99 30 5918

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | EP 0 682 417 A (NIPPON TELEGRAPH & TELEPHONE) 15 November 1995 (1995-11-15)<br><br>* abstract; figures 2A-4B *<br>* page 2, line 43 - page 3, line 4; figures 1A,1B *<br>* page 3, line 29 - page 4, line 31 *<br>* page 5, line 31 - line 51; tables 1,2 *<br>* page 6, line 39 - line 40 *<br>--- | 1-3,6-16<br><br>4,5 | H04B7/005 |
| X<br><br>Y<br>A | WO 96 31014 A (QUALCOMM INC) 3 October 1996 (1996-10-03)<br><br><br>* abstract; figures 2A-3 *<br>* page 4, line 6 - page 5, line 12 *<br>* page 6, line 25 - page 7, line 22 *<br>* page 10, line 20 - page 12, line 4 *<br>* page 12, line 22 - line 26 *<br>--- | 1,7,9,<br>11,14<br>4,5<br>2,3,6,8,<br>10,12,<br>13,15,16 | |
| X<br><br>A | WO 97 26716 A (NOKIA TELECOMMUNICATIONS OY ;NOKIA MOBILE PHONES LTD (FI); SAARIO) 24 July 1997 (1997-07-24)<br><br>* abstract *<br>* page 4, line 3 - last line *<br>* page 6, line 8 - page 8, line 30 *<br>---<br>-/-- | 1-4,7,8,<br>11,14-16<br><br>6,9,10,<br>12,13 | TECHNICAL FIELDS SEARCHED (Int.Cl.7)<br><br>H04B |

The present search report has been drawn up for all claims

| Place of search | Date of completion of the search | Examiner |
|---|---|---|
| THE HAGUE | 1 February 2000 | Sieben, S |

EPO FORM 1503 03.82 (P04C01)

**European Patent Office**

## EUROPEAN SEARCH REPORT

Application Number

EP 99 30 5918

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SZU-LIN SU ET AL: "Reverse-link power control strategies for CDMA cellular network" SIXTH IEEE INTERNATIONAL SYMPOSIUM ON PERSONAL, INDOOR AND MOBILE RADIO COMMUNICATIONS. PIMRC'95. WIRELESS: MERGING ONTO THE INFORMATION SUPERHIGHWAY (CAT. NO.95TH8135), PROCEEDINGS OF 6TH INTERNATIONAL SYMPOSIUM ON PERSONAL, INDOOR AND MOBILE RADIO , pages 461-465 vol.2, XP002127786 1995, New York, NY, USA, IEEE, USA ISBN: 0-7803-3002-1 | 1-3,6-8, 11,14-16 | |
| A | * page 463, left-hand column, line 19 – right-hand column, line 20; figure 3 *<br>----- | 9,10,12, 13 | |

TECHNICAL FIELDS SEARCHED (Int.Cl.7)

The present search report has been drawn up for all claims

| Place of search | Date of completion of the search | Examiner |
|---|---|---|
| THE HAGUE | 1 February 2000 | Sieben, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 99 30 5918

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2000

| Patent document cited in search report | | Publication date | Patent family member(s) | | Publication date |
|---|---|---|---|---|---|
| EP 0682417 | A | 15-11-1995 | JP | 2980156 B | 22-11-1999 |
| | | | JP | 8032513 A | 02-02-1996 |
| | | | CA | 2149094 A,C | 13-11-1995 |
| | | | CN | 1117225 A,B | 21-02-1996 |
| | | | KR | 143836 B | 01-08-1998 |
| | | | US | 5604766 A | 18-02-1997 |
| WO 9631014 | A | 03-10-1996 | AU | 710025 B | 09-09-1999 |
| | | | AU | 5378296 A | 16-10-1996 |
| | | | BR | 9607976 A | 13-01-1998 |
| | | | CA | 2216729 A | 03-10-1996 |
| | | | EP | 0818084 A | 14-01-1998 |
| | | | JP | 11502991 T | 09-03-1999 |
| | | | ZA | 9602030 A | 16-07-1996 |
| WO 9726716 | A | 24-07-1997 | FI | 960276 A | 20-07-1997 |
| | | | AU | 1446197 A | 11-08-1997 |
| | | | EP | 0815656 A | 07-01-1998 |
| | | | JP | 11506891 T | 15-06-1999 |
| | | | NO | 974312 A | 18-11-1997 |

EPO FORM P0459

For more details about this annex : see Official Journal of the European Patent Office, No. 12/82